# EUROPEAN PATENT APPLICATION

(11) **EP 4 675 829 A1**
(43) Date of publication of application: **07.01.2026**
(21) Application number: 24763467.8
(22) Date of filing: 30.01.2024
(51) Int. Cl.: H01M 50/51, H01M 50/503, H01M 50/509, H01M 50/512, H01M 50/517, H01M 50/522, H01M 50/588, H01M 50/591

(54) **BATTERY PACK**

(30) Priority: 28.02.2023 JP 2023030513
(71) Applicant: Panasonic Energy Co., Ltd., Osaka 570-8511 (JP)
(72) Inventor: NAKAMURA, Takuo, Osaka 571-0057 (JP); SASAJI, Katsuaki, Osaka 571-0057 (JP)
(74) Representative: Eisenführ Speiser
(86) International application number: PCT/JP2024/002845
(87) International publication number: WO 2024/180982

(57) **Abstract**

A battery pack 100 includes a battery block 4 including a plurality of battery cells 3, and series busbars 10 connecting the plurality of battery cells 3 in the battery block 4 in series. At least one of the series busbars 10 includes a first busbar 11A and a second busbar 11B connected in a separable manner from each other, and a screw 21 electrically connecting the first busbar 11A to the second busbar 11B. The screw 21 being tightened electrically connects the first busbar 11A to the second busbar 11B. The screw 21 being loosened causes the first busbar 11A and the second busbar 11B to be in a disconnected state.

## Description

### TECHNICAL FIELD

The present disclosure relates to a battery pack including multiple battery cells connected in series.

### BACKGROUND ART

A battery pack including multiple battery cells connected in series can have a high voltage. Such a battery pack can have a higher output voltage by increasing the number of battery cells connected in series. The battery pack with a high output voltage uses a service plug that disconnects the series connection of the battery cells and causes the output voltage to be 0 V to ensure operation safety and prevent various issues caused by a high voltage at the output terminal, such as discharging or leakage from the output terminal or a circuit connected to the output terminal (Patent Literature 1).

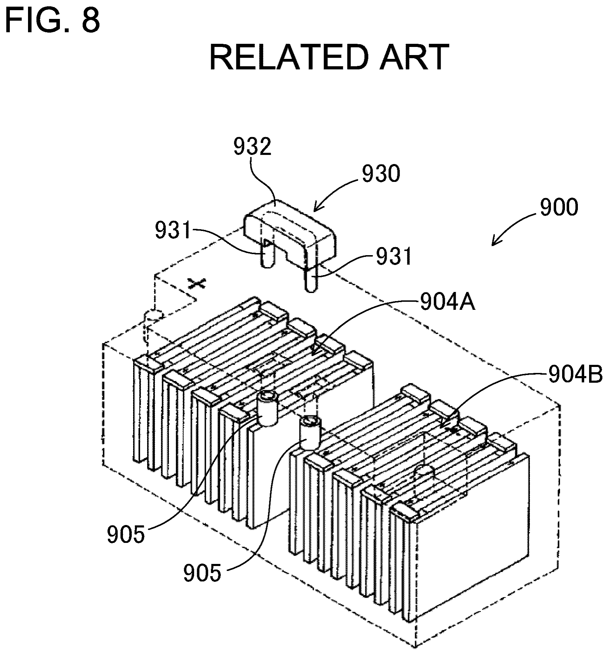

FIG. 8 is a perspective view of a battery pack 900 including a service plug. The battery pack 900 in this figure includes a pair of battery blocks 904A and 904B arranged adjacent to each other and connected in series with a service plug 930. The service plug 930 is attached to receiving terminals 905 on the respective battery blocks 904A and 904B in a detachable manner. The service plug 930 includes a U-shaped conductive metal portion having its middle portion covered with an insulating member 932. The conductive metal portion has two uncovered ends that are insertion portions 931 being parallel to each other. Each insertion portion 931 is received in the corresponding receiving terminal 905 on the battery block 904A or 904B in a detachable manner. The receiving terminals 905 on the pair of battery blocks 904A and 904B face each other. The receiving terminals 905 on the pair of battery blocks 904A and 904B each have a metal cylindrical body that can receive the corresponding insertion portion 931 of the service plug 930 in a detachable manner. The receiving terminals 905 are connected to lead plates in the battery blocks 904A and 904B. The battery pack 900 described above has the pair of insertion portions 931 of the service plug 930 received in the receiving terminals 905 on the respective battery blocks 904A and 904B adjacent to each other to connect the pair of battery blocks 904A and 904B in series. The service plug 930 is removed from the receiving terminals 905 before an operation to disconnect the connection between the adjacent battery blocks 904A and 904B, causing the output voltage to be 0 V.

### CITATION LIST

### PATENT LITERATURE

Patent Literature 1: Japanese Unexamined Patent Application Publication No. 2002-343331

### SUMMARY OF INVENTION

### TECHNICAL PROBLEM

Although the battery pack 900 described above can disconnect the battery blocks 904A and 904B in a series connection by removing the service plug 930, the service plug and the structure for electrical connection using the service plug connected in a detachable manner are notably complex. The service plug has each insertion portion received in the cylindrical body of the corresponding receiving terminal for electrical connection. This can cause difficulty in maintaining low electrical contact resistance between the insertion portions of the service plug and the cylindrical bodies of the receiving terminals over a long period. The contact resistance between the insertion portions of the service plug and the cylindrical bodies of the receiving terminals can be improved by increasing the surface pressure between the insertion portions and the cylindrical bodies when the insertion portions are received in the cylindrical bodies. However, the insertion portions cannot be smoothly attached to and detached from the cylindrical bodies with an increased surface pressure. When the surface pressure between the insertion portions and the cylindrical bodies is low, stable and low contact resistance cannot be achieved, possibly causing contact failure. The service plug described above is located in a circuit including the battery blocks connected in series, and thus causes a load current of the battery pack to flow through the service plug. The contact resistance between the insertion portions and the cylindrical bodies increases the power loss in proportion to the square of the load current.

In response to the above issue, one or more aspects of the present disclosure are directed to a structure for disconnecting a power connection path in place of a service plug, and a battery pack in a connected state that can reduce and stabilize the contact resistance with a simplified operation.

### SOLUTION TO PROBLEM

A battery pack according to an aspect of the present disclosure includes a battery block including a plurality of battery cells, and series busbars connecting the plurality of battery cells in the battery block in series. At least one of the series busbars includes a first busbar and a second busbar connected in a separable manner from each other, and a screw electrically connecting the first busbar to the second busbar. The screw being tightened electrically connects the first busbar to the second busbar. The screw being loosened causes the first busbar and the second busbar to be in a disconnected state.

### ADVANTAGEOUS EFFECTS OF INVENTION

The battery pack described above has a structure for disconnecting the power connection path without a service plug. The battery pack in a connected state can reduce and stabilize the contact resistance with a simplified operation.

### BRIEF DESCRIPTION OF DRAWINGS

FIG. 1 is a schematic perspective view of a battery pack according to one embodiment of the present disclosure;
FIG. 2 is an enlarged perspective view of a first busbar and a second busbar in a connected state in the battery pack shown in FIG. 1;
FIG. 3 is a schematic perspective view of the first busbar and the second busbar in a disconnected state;
FIG. 4 is a schematic cross-sectional view of the first busbar and the second busbar in a disconnected state;
FIG. 5 is a schematic cross-sectional view of a series busbar in another example;
FIG. 6 is a schematic cross-sectional view of a series busbar in another embodiment;
FIG. 7 is a circuit diagram of the battery pack; and
FIG. 8 is a schematic perspective view of a known battery pack.

### DESCRIPTION OF EMBODIMENTS

One or more embodiments of the present disclosure will now be described in detail with reference to the drawings. Terms indicating specific directions or positions (e.g., upward, downward, and other similar terms) are hereafter used as appropriate to facilitate understanding of the present disclosure. Although such terms specify directions or positions with reference to the drawings, the terms do not limit the technical scope of the present disclosure. The same reference numerals denote the same or similar parts or components in the drawings.

One or more embodiments described below are mere examples of the technical ideas of the present disclosure, and the present disclosure is not limited to the embodiments described below. The dimensions, materials, shapes, and relative positions of the components described below are mere examples and are not intended to limit the scope of the present disclosure, unless otherwise specified. An embodiment or an example described below may be applicable to other embodiments or examples. The sizes and the positional relationships of the components shown in the drawings may be exaggerated for clarity.

A battery pack according to one embodiment of the present disclosure includes a battery block including a plurality of battery cells, and series busbars connecting the plurality of battery cells in the battery block in series. At least one of the series busbars is a separable busbar including a first busbar and a second busbar connected in a separable manner from each other, and a screw electrically connecting the first busbar to the second busbar. The screw being tightened electrically connects the first busbar to the second busbar. The screw being loosened causes the first busbar and the second busbar to be in a disconnected state.

The battery pack described above has a structure for disconnecting the power connection path in place of a service plug. The battery pack in a connected state can reduce and stabilize the contact resistance with a simplified operation. With the at least one series busbar including the first busbar and the second busbar, the first busbar and the second busbar can be separated and connected with the screw. When the screw is loosened, the first busbar and the second busbar enter a disconnected state. When the screw is tightened, the first busbar and the second busbar clamped and pressed together with the screw enter a connected state. The first busbar and the second busbar that can easily and reliably enter a connected state with the screw prevent the contact resistance from increasing, maintain stable contact resistance over a long period, and reduce power loss. These effects are less likely to be achieved by the service plug that is attached and detached.

In a battery pack according to another embodiment of the present disclosure, the first busbar may be an elastically deformable metal plate. The screw being loosened may cause the first busbar to separate from the second busbar with an elastic restoring force of the first busbar. The first busbar and the second busbar thus enter a disconnected state. The battery pack has a structure for disconnecting the power connection path in place of a service plug with a simplified operation. With the first busbar being the elastically deformable metal plate and the screw being loosened, the first busbar is maintained at a position to be separated from the second busbar with the elastic restoring force of the first busbar, causing the first busbar to be reliably disconnected from the second busbar.

In a battery pack according to another embodiment of the present disclosure, the screw being loosened may cause the first busbar and the second busbar to be in a disconnected state with an elastic member or an insulator. The battery pack described above has a structure for disconnecting the power connection path in place of a service plug. The battery pack in a connected state can reduce and stabilize the contact resistance with a simplified operation. With the first busbar or the second busbar with a predetermined position, orientation, and shape, the first busbar can be separated from the second busbar, reliably causing the first busbar and the second busbar to be in a disconnected state with the elastic member or the insulator. When the elastic member or the insulator is placed, for example, between the first busbar and the battery holder (or the battery block or the battery cell), the first busbar can be separated and disconnected from the second busbar. When the elastic member or the insulator is placed between the first busbar and the second busbar, the first busbar can be separated from the second busbar to be in a disconnected state.

In a battery pack according to another embodiment of the present disclosure, at least one of the first busbar or the second busbar may include a bend or a slope. The battery pack described above has a structure for disconnecting the power connection path in place of a service plug. The battery pack in a connected state can reduce and stabilize the contact resistance with a simplified operation. With at least one of the first busbar or the second busbar including a bend or a slope, when the first busbar or the second busbar has a predetermined shape, orientation, and position, the first busbar and the second busbar can be reliably maintained to be separate. In this case, the first busbar and the second busbar can also come in contact with each other in a wide area without any gap when connected. For example, the first busbar including the bend or the slope may be located away from the side surface of the battery cell, causing the first busbar and the second busbar to be in a disconnected state. The first busbar and the second busbar can also be appropriately in contact with each other in a wide area without any gap when connected, reducing the contact resistance.

In a battery pack according to another embodiment of the present disclosure, the battery block may include a positive lead plate connected to positive electrodes of the plurality of battery cells, a negative lead plate connected to negative electrodes of the plurality of battery cells, and a plurality of parallel blocks each including battery cells of the plurality of battery cells connected in parallel to one another through the positive lead plate and the negative lead plate. The plurality of parallel blocks may be connected in series by the series busbars. The battery pack described above has a structure for disconnecting the power connection path in place of a service plug, ensuring safety of the operator with a simplified operation. With the series busbars connecting the parallel blocks in series, the first busbar and the second busbar are easily separated to be in a disconnected state when the screw is loosened, avoiding a high voltage environment.

In a battery pack according to another embodiment of the present disclosure, the screw being tightened electrically may connect the first busbar to the second busbar, with a surface of the first busbar in a connected state to a surface of the second busbar. The battery pack described above has a structure for disconnecting a power connection path in place of a service plug. The battery pack in a connected state can reduce and stabilize the contact resistance with a simplified operation. With the screw being tightened, the first busbar and the second busbar, with the surface of the first busbar being in contact with the surface of the second busbar, are pressed together to be connected.

In a battery pack according to another embodiment of the present disclosure, the battery block may include a battery holder holding the plurality of battery cells. The battery holder may include a support supporting, at a predetermined position, a connection portion of the first busbar and a connection portion of the second busbar for electrical connection of the first busbar and the second busbar. The screw may be tightened on the connection portion of the first busbar and the connection portion of the second busbar to fasten the first busbar to the second busbar. The battery pack described above has a structure for disconnecting a power connection path in place of a service plug. The battery pack in a connected state can reduce and stabilize the contact resistance with a simplified operation. With the support supporting each of the first busbar and the second busbar of the separable busbar at the predetermined position, the first busbar and the second busbar can enter a connected state reliably and appropriately.

In a battery pack according to another embodiment of the present disclosure, the battery block may include a battery holder holding the plurality of battery cells. The battery holder may include a positioner that positions, at a predetermined position, a connection portion of the first busbar and a connection portion of the second busbar for electrical connection of the first busbar and the second busbar. The screw may be tightened on the connection portion of the first busbar and the connection portion of the second busbar to fasten the first busbar to the second busbar. The battery pack described above has a structure for disconnecting the power connection path in place of a service plug. The battery pack in a connected state can reduce and stabilize the contact resistance with a simplified operation. With the positioner positioning each of the first busbar and the second busbar of the separable busbar at the predetermined position, the first busbar and the second busbar can enter a connected state reliably and appropriately.

In a battery pack according to another embodiment of the present disclosure, the separable busbar may include a nut to receive the screw. The battery block may include a battery holder holding the plurality of battery cells. The battery holder may include a nut holder holding the nut in a nonrotatable manner. The screw may be tightened into the nut held by the nut holder to fasten the first busbar to the second busbar. The battery pack described above has a structure for disconnecting the power connection path in place of a service plug. The battery pack in a connected state can reduce and stabilize the contact resistance with a simplified operation. With the battery holder including a nut holder for holding the nut in a nonrotatable manner, the screw is promptly and reliably tightened into the nut held in a nonrotatable manner in the nut holder in the battery holder in a predetermined orientation and position, causing the first busbar and the second busbar to be in an electrically connected state when the screw is tightened. When the tightened screw is loosened from the nut and the first busbar and the second busbar are separated, the screw is loosened and the first busbar and the second busbar enter a disconnected state, allowing easy, reliable, and efficient connection and separation of the series busbar. The screw tightened into the nut with the first busbar and the second busbar between the screw and the nut causes the first busbar and the second busbar to be in a connected state while being clamped and pressed together, avoiding an increase in the contact pressure and allowing stable contact resistance over a long period.

In a battery pack according to another embodiment of the present disclosure, the nut holder may be a fitting recess receiving the nut in a nonrotatable manner. The battery pack described above has a structure for disconnecting the power connection path in place of a service plug. The battery pack in a connected state can reduce and stabilize the contact resistance with a simplified operation. The nut is placed in the fitting recess in the nut holder in a nonrotatable manner, preventing the nut from slipping off. This allows the first busbar and the second busbar to be easily, reliably, and efficiently connected and separated, and to appropriately be in contact with each other.

### [EMBODIMENT 1]

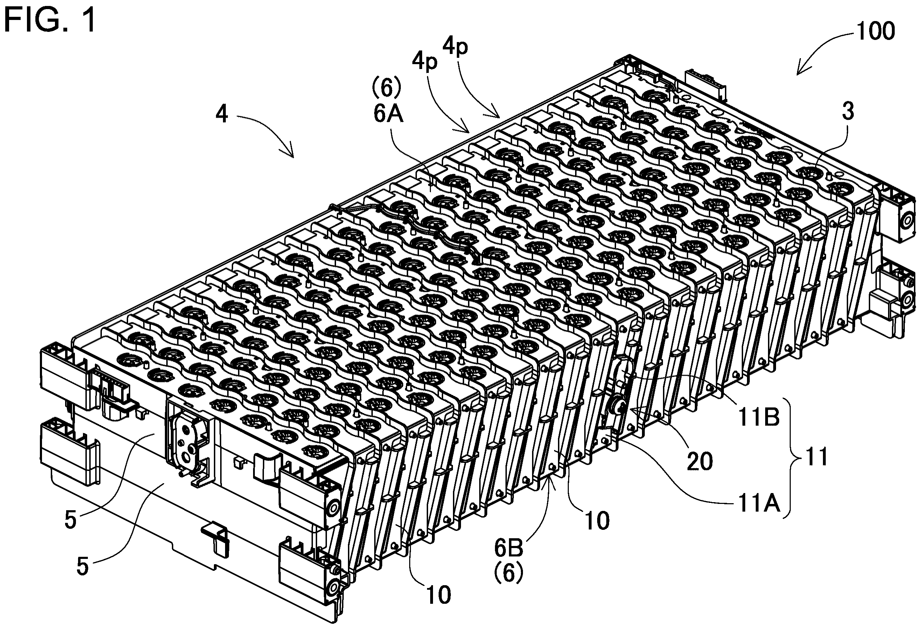

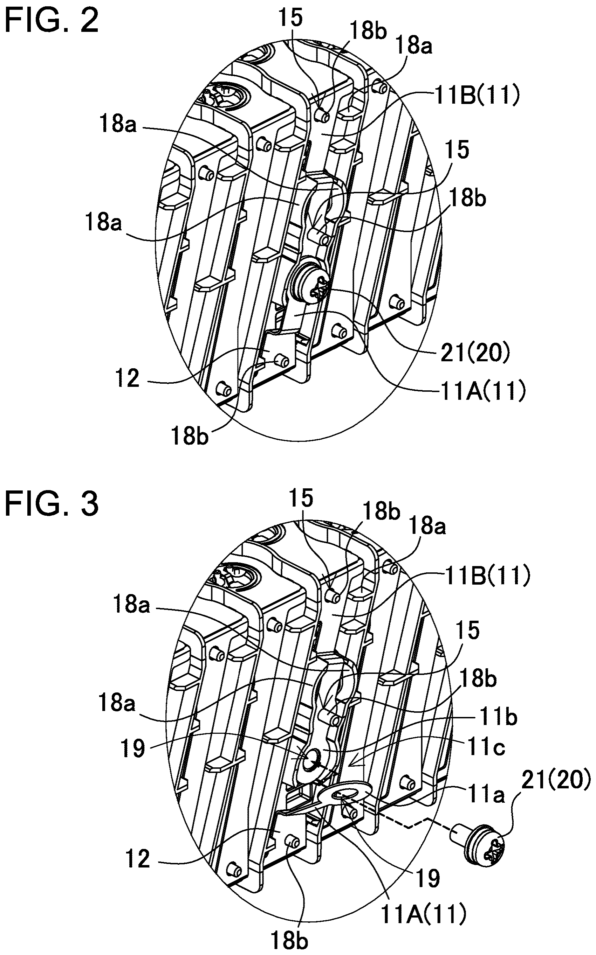

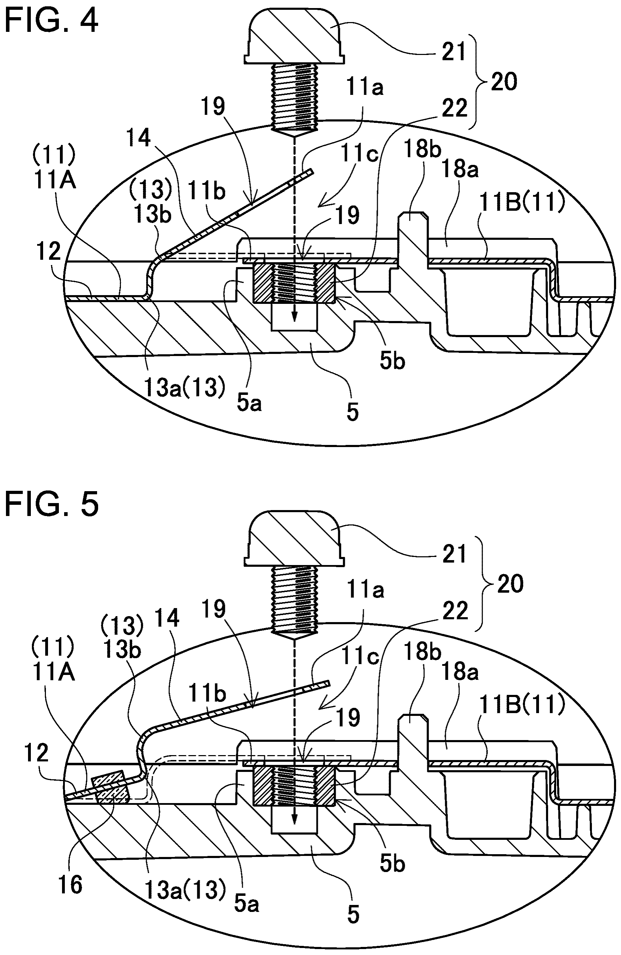

FIG. 1 is a schematic perspective view of a battery pack 100. FIG. 2 is a schematic perspective view of a first busbar 11A and a second busbar 11B in a connected state. FIG. 3 is a schematic perspective view of the first busbar 11A and the second busbar 11B in a disconnected state. FIG. 4 is a schematic cross-sectional view of the first busbar 11A and the second busbar 11B in a disconnected state. FIG. 5 is a schematic cross-sectional view of a separable busbar 11 in another example.

The battery pack 100 includes a battery block 4 including multiple battery cells 3, a battery holder 5 holding the battery cells 3 in position, multiple lead plates 6 each connected to the end face electrode of the corresponding battery cell 3, and multiple series busbars 10 having upper ends and lower ends electrically connected to the respective lead plates 6. At least one of the series busbars 10 (the separable busbar 11) includes the first busbar 11A and the second busbar 11B. The first busbar 11A and the second busbar 11B separated from each other enter a disconnected state.

The battery pack 100 is used as a power supply unit such as a battery module or a battery pack including multiple battery cells 3. The battery pack 100 is included in a product as a power supply. Although not shown, the battery pack can be covered with, for example, an outer case or an inner case, a cover, or a sheet, and stored in, for example, a rack.

### (Battery Block 4)

The battery block 4 includes the multiple battery cells 3 connected in series or in parallel. Multiple battery blocks or multiple battery packs can be connected to obtain a predetermined voltage and a predetermined capacity. For ease of explanation, the battery block 10in FIG. 1 will be mainly described as an example. The battery block 4 in FIG. 1 includes the battery cells 3 each arranged with its positive electrode facing the upper surface of the battery block 4 and its negative electrode facing the lower surface of the battery block 4. The battery block 10 can include the battery cells 3 connected and arranged in a manner other than described above. Although not shown, for example, the battery block can include the battery cells each arranged with its negative electrode facing the upper surface of the battery block and its positive electrode facing the lower surface of the battery block. The battery block can include predetermined blocks including battery cells in the same orientation, battery cells arranged with their positive and negative electrodes alternately facing the upper surface and the lower surface, or battery cells some of which are arranged with their positive electrodes facing the upper surface and their negative electrodes facing the lower surface whereas other battery cells are arranged in an opposite manner. The battery block can also include the battery cells arranged with their positive electrodes or negative electrodes facing one of the side surfaces of the battery block. The battery block can also include the battery cells some of which are arranged with their positive electrodes facing one of the side surfaces and their negative electrodes facing the other side surface whereas other battery cells are arranged in an opposite manner. The battery block can also include the battery cells each arranged with its positive electrode or its negative electrode facing a surface other than one of the outer peripheral surfaces of the battery block.

The battery block 4 includes the battery cells 3 arranged parallel to each other, with the end face electrodes of the battery cells 3 aligned flush with one another. The battery block 4 in FIG. 1 has an overall shape being a substantially rectangular prism. The battery block 4 includes positive lead plates 6A arranged parallel to each other on its upper surface and negative lead plates 6B arranged parallel to each other on its lower surface. The battery block 4 includes pairs of series busbars 10 arranged in multiple rows on its two side surfaces. The battery block 4 includes parallel blocks connected in series with the series busbars 10 arranged on its two sides. Although not shown, the battery pack may include parallel blocks connected in series with the series busbars arranged on one side surface of the battery block, rather than being connected with pairs of series busbars. The battery pack may include the series busbar on its upper surface or lower surface, or both.

The battery block 4 includes parallel blocks 4p including multiple rows of battery cells 3 aligned flush with one another and connected in parallel with the positive lead plates 6A and the negative lead plates 6B. The multiple parallel blocks 4p are arranged in multiple rows and have adjacent parallel blocks 4p connected in series with the series busbar 10. The battery block 4 in FIG. 1 includes the parallel blocks 4p including the battery cells 3 each arranged between adjacent battery cells 3 in the adjacent parallel blocks 4p to arrange the parallel blocks 4p close to one another. The present disclosure is not limited to the structure shown in the figure in which multiple parallel blocks are arranged in multiple rows. The battery cells may also be arranged, for example, in a grid pattern (not shown).

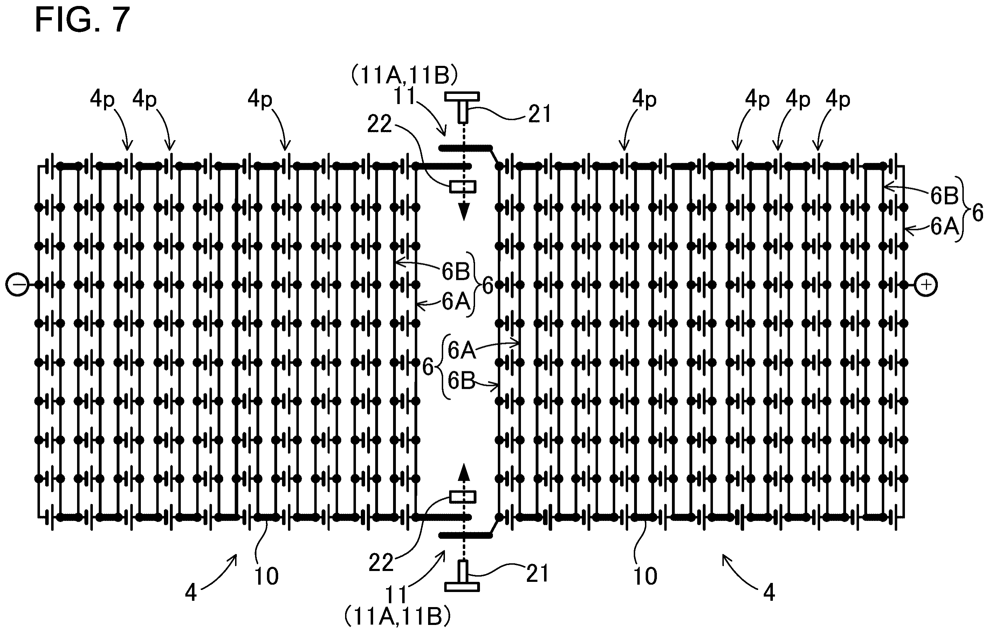

FIG. 7 is a circuit diagram of the battery pack 100. The battery pack 100 in the figure includes the parallel blocks 4p including multiple rows of the battery cells 3 connected in parallel with the lead plates 6 (the positive lead plate 6A and the negative lead plate 6B). The adjacent parallel blocks 4p are connected in series with the series busbars 10. The series busbars 10 in the figure connect the parallel blocks 4p, which include the battery cells 3 connected in parallel with the positive lead plate 6A and the negative lead plate 6B, in series to have a high output voltage. The battery pack 100 can obtain a predetermined output voltage and a predetermined capacity with a total positive terminal and a total negative terminal located on each end face of the battery pack 100. The battery pack 100 with a high output voltage is to be used while ensuring operation safety, preventing various issues caused by a high voltage at the output terminals, such as discharging or leakage from the output terminals or the circuit connected to the output terminals, and also preventing issues caused by excess short-circuiting current at the output terminals. The battery pack 100 includes the separable busbar 11 that can easily release the series connection to disconnect the power connection path, in place of a known service plug.

The battery pack 100 in the circuit diagram in FIG. 7 and the perspective view in FIG. 1 includes the parallel blocks 4p including twelve adjacent battery cells 3 connected in parallel with the lead plates 6. The adjacent parallel blocks 4p are connected in series with the series busbars 10. As shown in the circuit diagram in FIG. 7 and the perspective view in FIG. 1, the separable busbar 11 is one of the series busbars 10 connecting adjacent parallel blocks 4p in series. In the perspective view in FIG. 1, the battery pack 100 includes a specific series busbar 10 as the separable busbar 11 in the middle of the side surface of the battery block 4 to allow the series connection to be releasable as appropriate.

The battery block 4 includes the battery holder 5 holding each battery cell 3 in position. The battery holder 5 includes insertion cylinders, which are molded from an insulating material such as plastic, for receiving the battery cells 3 in position. The battery holder 5 may include supports 18a and positioners 18b. Each support 18a supports the corresponding series busbar 10 at a predetermined position. Each positioner 18b positions the corresponding series busbar 10 at a predetermined position. The shape, size, structure, number, or arrangement of the supports 18a and the positioners 18b are not limited, and may be different from the examples in the figures. One or more supports 18a or positioners 18b may be located at predetermined positions as appropriate for the shape or the orientation of the target portion to be supported or the shape or the contact state of the portion to be in contact, supported, or positioned. The supports 18a and the positioners 18b are, for example, protrusions and recesses, ribs, plates, walls, protrusions, rods, pillars, pyramids, tapered members, or sloped members. The supports 18a and the positioners 18b are in contact with the series busbars 10 at a point, along a line, or by surfaces to support, hold, and position each series busbar 10 at the predetermined position and orientation. The supports 18a and the positioners 18b can support, hold, and position each series busbar 10 at the predetermined position and orientation, as well as accommodating dimensional errors of the series busbars 10.

The supports 18a support the first busbar 11A and the second busbar 11B in the separable busbar 11 at predetermined positions. When a screw 21 shown in FIG. 3 is loosened, the supports 18a support a first contact portion 11a of the first busbar 11A and a second contact portion 11b of the second busbar 11B at predetermined positions. The second busbar 11B in the figure has a step defined by a base plate 12 on a lower level and the second contact portion 11b on an upper level with two bends 13 (stepped portion) between them. In the figure, at least one support 18a being a rib, a wall, or a plate is located on the two sides of each of the base plate 12 on the lower level, the stepped portion, and the second contact portion 11b on the upper level to support, hold, and clamp the second busbar 11B. The supports 18a being ribs support and hold the base plate 12 on the lower level from the two sides. The supports 18a being plates, walls, or surfaces (curved surfaces) support and hold the stepped portion and the upper level from the two sides. The supports 18a also support, hold, and clamp the base plate 12 on the lower level adjacent to the first busbar 11A.

The positioners 18b position the first busbar 11A and the second busbar 11B in the separable busbar 11 at predetermined positions. When the screw 21 shown in FIG. 3 is loosened, the positioners 18b position the first contact portion 11a of the first busbar 11A and the second contact portion 11b of the second busbar 11B at the predetermined positions. The second busbar 11B in the figure has through-holes 15 in the base plate 12 on the lower level and in the middle of the upper level. The positioners 18b being raised or columnar protrusions in the figure are placed through the respective through-holes 15 on the lower level and the upper level to position the second busbar 11B. One of the positioners 18b is also placed through the through-hole 15 in the base plate 12 on the lower level adjacent to the first busbar 11A to position the second busbar 11B.

The number of supports 18a and positioners 18b supporting and positioning the separable busbar 11 at the predetermined position and orientation may be greater than the number of supports 18a and the positioners 18b in other series busbars 10 to more precisely control the position and orientation of the separable busbar 11 being separated or connected. The first busbar 11A (the first contact portion 11a) and the second busbar 11B (the second contact portion 11b) in the separable busbar 11 positioned by the supports 18a and the positioners 18b at the predetermined positions can be reliably separated to be in a disconnected state when the screw 21 is loosened, and can be in a connected state reliably and electrically when the screw 21 is tightened. The first busbar 11A and the second busbar 11B can also be connected with the surface of the first busbar 11A appropriately being in contact with the surface of the second busbar 11B. As shown in the figure, the supports 18a are arranged symmetrically on the two sides of the step on the upper level with the positioner 18b located in the middle. The first busbar 11A and the second busbar 11B can thus be arranged opposite or vertically inverted to each other. Although not shown, the supports or the positioners may have structures such as grooves or protrusions and recesses that can hold or temporarily hold the first busbar or the second busbar at the predetermined position. Each support 18a and each positioner 18b can be used interchangeably to position and support the series busbar 10.

The battery holder 5 in FIG. 4 includes a nut holder 5a receiving and holding a nut 22 in a connector 20. The nut holder 5a holds the nut 22 in a nonrotatable manner with a fitting recess 5b receiving the nut 22 in a nonrotatable manner. The nut holder 5a places the nut 22 in position when the screw 21 is tightened. For example, the fitting recess 5b receiving a hexagonal nut, commonly used as the nut 22, in a nonrotatable manner is a hexagonal prism holding the received nut 22 in a nonrotatable manner. The connection structure includes the nut 22 in position in the battery holder 5. The screw 21 is tightened into the nut 22 to clamp the first busbar 11A and the second busbar 11B to be in contact between the head of the screw 21 and the receiving surface of the nut 22 in a stacked manner. This structure can reduce the contact resistance between the first busbar 11A and the second busbar 11B in a connected state particularly, avoiding an increase in the contact resistance over a long period.

The present disclosure is not limited to the structure including the separable busbar that is electrically connected when the screw is tightened into the nut to clamp the first busbar and the second busbar to be in contact between the screw and the nut. Although not shown, the second busbar to be stacked on the lower surface may have an internal threaded hole. The screw may be tightened into this internal threaded hole to fasten the first busbar and the second busbar being stacked without using the nut. This structure allows, with the second busbar being a thick metal plate and having the internal threaded hole, the contact resistance between the first busbar and the second busbar to be reduced when the screw is tightened tightly. The battery holder can have an internal threaded hole for receiving the screw. The screw can be tightened into the internal threaded hole to fasten the first busbar and the second busbar being stacked. This structure allows, with the screw tightly tightened into the internal threaded hole, the contact resistance between the first busbar and the second busbar to be reduced when the internal threaded hole in the battery holder is deep, when the battery holder is formed from hard plastic, or when an area having the internal threaded hole is formed from a hard material.

### (Lead Plate 6)

The battery pack 100 includes the lead plates 6 connected to the end face electrodes of the battery cells 3. The lead plates 6 in FIG. 1 include multiple positive lead plates 6A connected to the positive electrodes of the battery cells 3 on the upper surface of the battery block 4, and multiple negative lead plates 6B connected to the negative electrodes of the battery cells 3 on the lower surface of the battery block 4. The positive lead plates 6A and the negative lead plates 6B are electrically connected to the end face electrodes of the battery cells 3 by, for example, spot welding or laser welding. For example, each welded area can include a connection arm protruding toward the corresponding end face electrode to be reliably welded to the end face electrode. Each connection arm in contact with the surface of the corresponding end face electrode is reliably welded to the end face electrode by, for example, spot welding or laser welding for electrical connection. The positive lead plates 6A and the negative lead plates 6B can be conductive metal plates such as aluminum plates, nickel plates, or copper plates. The positive lead plates 6A and the negative lead plates 6B can also be plated.

The positive lead plates 6A and the negative lead plates 6B connect the multiple battery cells 3 in parallel. The positive lead plates 6A and the negative lead plates 6B are each an elongated plate extending along the upper or lower surface of the corresponding parallel block 4p including the multiple battery cells 3 arranged in a single row. The positive lead plates 6A and the negative lead plates 6B each include connection arms each at a position facing the corresponding end face electrode of the battery cells 3. With the connection arms connected to the respective end face electrodes of the battery cells 3, the positive lead plate 6A and the negative lead plate 6B connect the battery cells 3 included in each parallel block 4p in parallel. The battery block 4 includes the multiple parallel blocks 4p arranged in multiple rows. The positive lead plates 6A in multiple rows are thus arranged parallel to one of the upper and lower surfaces (the upper surface in FIG. 1) of the battery block 4, and the negative lead plates 6B in multiple rows are arranged parallel to the other surface (the lower surface in FIG. 1) of the battery block 4, connecting the battery cells 3 in the parallel blocks 4p in parallel. Although the battery block 4 shown in FIG. 1 includes the parallel blocks 4p each including multiple battery cells 3 arranged in a single row, the battery block may include parallel blocks each including the battery cells arranged in multiple rows.

The multiple rows of parallel blocks 4p are connected in series with the series busbars 10, causing potential differences between adjacent lead plates. The lead plates 6 arranged parallel to each other thus have an insulating gap between them. The lead plates 6 each connected to the end face electrodes of the battery cells 3 in the corresponding parallel block 4p have a width that leaves the insulating gap between adjacent lead plates 4. The positive lead plate 6A and the negative lead plate 6B as adjacent lead plates in position are connected to the end face electrodes of the corresponding battery cells 3 with the insulation gap between the adjacent lead plates. The battery block 4 in FIG. 1 includes insulation walls in the insulation gaps.

The lead plates 6 and the series busbars 10 can be connected by, for example, laser welding. Each of the positive lead plates 6A and the negative lead plates 6B can include, at each end, a bent connector bent at substantially 90 degrees for simple, easy, and reliable connection to the corresponding series busbar 10. With the positive lead plate 6A located on the upper surface and the negative lead plate 6B located on the lower surface of the battery block 4, the bent connectors in a perpendicular orientation can be in contact with the surfaces of an upper end connector and a lower end connector of the corresponding series busbar 10 for connection. The positive lead plate 6A and the negative lead plate 6B can be integral with the series busbars 10. Each lead plate 6 and the corresponding series busbar 10 can be connected at a portion including a substrate mounting tab. The substrate mounting tabs can be used for, for example, substrate sensing such as detection of the voltage in the battery block 4. The substrate mounting tabs can be connected to the lead plates 6 and the series busbars 10 by laser welding.

### (Series Busbar 10)

The series busbars 10 connect the battery cells 3 in series with the lead plates 6. The series busbars 10 in FIG. 1 each connected to the respective positive lead plate 6A and the negative lead plate 6B vertically extend on the side surfaces of the battery block 4. The series busbars 10 may be connected to the lead plates 6 with any method or in any manner. For example, the series busbars 10 and the lead plates 6 may be separate metal plates that can be connected to each other by welding. Each series busbar 10 can also be a single metal plate integral with the corresponding lead plate 6. The series busbar 10 and the lead plate 6 in this case can be, for example, a narrow strip of a metal plate bent at right angles. The lead plate 6 is located on either the upper or lower surface of the battery block 4. The series busbar 10 is located on the corresponding side surface of the battery block 4.

The series busbars 10 are electrically connected to the respective lead plates 6 to connect the multiple parallel blocks 4 in series. The series busbars 10 can be narrow conductive metal plates such as aluminum plates, nickel plates, or copper plates. Each series busbar 10 has a large maximum current with the load current from the corresponding parallel block 4p. The battery pack shown in the circuit diagram in FIG. 7 includes pairs of series busbars 10. The series busbars 10 in each pair are arranged vertically opposite to each other in the figure. Each pair of series busbars 10 connect the corresponding parallel block 4p in series to divide the load current to the pair of series busbars. The battery pack 100 includes the series busbars 10 being parallel to the side surfaces of the battery block 4. The series busbars 10 connect the positive lead plate 6A and the negative lead plate 6B in series. The battery pack 100 shown in the circuit diagram in FIG. 7 includes pairs of series busbars 10. Each pair of series busbars 10 connect the ends of the positive lead plate 6A and the negative lead plate 6B in series. The battery pack 100 includes the pairs of series busbars 10 on the side surfaces of the battery block 4. Each pair of series busbars 10 connect the positive lead plate 6A and the negative lead plate 6B in series. The series busbars 10 each have the upper and lower ends connected to the respective positive lead plate 6A and the negative lead plate 6B in the adjacent parallel block 4p, connecting each of the multiple rows of adjacent parallel blocks 4p in series. The series busbars 10 shown in FIG. 1 each include the upper end connector and the lower end connector in a perpendicular orientation connected to the positive lead plate 6A and the negative lead plate 6B. The series busbars 10 each include a portion in a sloped orientation between the upper end connector and the lower end connector. The series busbars 10 each connect the upper end connector and the lower end connector to the positive lead plate 6A and the negative lead plate 6B in the adjacent parallel block 4p.

### (Separable Busbar 11)

The series busbars 10 include at least one separable busbar 11. The separable busbar 11 includes two separate components being the first busbar 11A and the second busbar 11B that are separable and connectable. The separable busbar 11 includes the first busbar 11A and the second busbar 11B that can be fastened with the screw 21. The first busbar 11A and the second busbar 11B are connected and fastened with the screw 21. When the screw 21 is tightened, or more specifically, when the screw 21 is tightened into the nut or the internal threaded hole, the first busbar 11A and the second busbar 11B are fastened and electrically connected to each other. When the screw 21 is loosened, or in other words, when the screw 21 is removed, the first busbar 11A and the second busbar 11B are separated and electrically disconnected. As shown in FIG. 3, the separable busbar 11 includes, for example, the first busbar 11A located away from the battery holder 5 and the second busbar 11B located in contact with or adjacent to the battery holder 5. When the screw 21 is removed, the first busbar 11A is spaced apart and separated from the second busbar 11B to be in a disconnected state, electrically disconnecting the adjacent parallel blocks 4p, disconnecting the power connection path.

The first busbar 11A and the second busbar 11B respectively include the first contact portion 11a and the second contact portion 11b that come in contact with each other. As indicated by the solid lines in FIG. 4, the separable busbar 11 in a disconnected state has a separation gap 11c between the first contact portion 11a in the first busbar 11A and the second contact portion 11b in the second busbar 11B. The first busbar 11A and the second busbar 11B are spaced apart and separated by the separation gap 11c. As indicated by the dashed lines in FIG. 4, when the separable busbar 11 in a connected state with the screw 21 is tightened, the first contact portion 11a in the first busbar 11A and the second contact portion 11b in the second busbar 11B come in contact with each other.

The separable busbar 11 includes the first busbar 11A and the second busbar 11B that are separable to be spaced apart from each other and in a disconnected state, releasing the series connection of the parallel blocks 4p and disconnecting the power connection path. The battery pack 100 releases the series connection of the parallel blocks 4p using the separable busbar 11 connecting the multiple parallel blocks 4p in series. This disconnects the output voltage and provides a safe environment in a similar manner to removing the service plug. The separable busbar 11 can disconnect the series connection of the battery blocks 4 at a predetermined position. As shown in the circuit diagram in FIG. 7, the battery pack 100 includes the series busbars 10 connecting twenty-one parallel blocks 4p in series. The parallel blocks 4p connects seven battery cells 3 in parallel with the positive lead plate 6A and the negative lead plate 6B. The multiple series busbars 10 connecting the parallel blocks 4p include a predetermined series busbar 10 being the separable busbar 11. When the separable busbar 11 is in a disconnected state, the power connection path is disconnected. As shown in the figure, the circuit configuration for disconnecting the series connection with a pair of separable busbars 11 reduces the current in the separable busbars 11 to half the load current. When the two separable busbars 11 are electrically disconnected, no voltage is output to the output terminals, providing a safe environment. The pair of separable busbars 11 are the series busbars 10, of the series busbars 10 connecting the twenty-one parallel blocks 4p in series, having a predetermined intermediate voltage in the power connection path of the battery pack 100. In the example circuit diagram in FIG. 7, a pair of series busbars 10 connecting ten parallel blocks 4p in series and eleven parallel blocks 4p in series are the pair of separable busbars 11. As described above, the separable busbar 11 is one of the series busbars 10 connecting the parallel blocks 4p in series. When the separable busbar 11 is not electrically connected, no voltage is output to the total positive terminal and the total negative terminal. The operator thus does not receive an electric shock when touching one of the common positive terminal and the common negative terminal. When a short circuit occurs, the short-circuited current corresponds to the predetermined intermediate voltage in the power connection path, providing a safe operation environment. This ensures the safety of operations including assembly, maintenance, and transportation of the battery pack 100. The battery pack 100 described above includes the pair of separable busbars 11 connecting the parallel blocks 4p in series. The power connection path is thus disconnected with the two separable busbars 11 in a disconnected state. The battery pack 100 may or may not include multiple separable busbars 11 for connecting the battery cells in series. The battery pack with a circuit configuration including a single separable busbar to connect the battery cells in series causes the single separable busbar to be in a disconnected state to disconnect the power connection path.

When the first busbar 11A and the second busbar 11B in the separable busbar 11 are connected, the positive lead plate 6A and the negative lead plate 6B are connected in series, similarly to the other series busbars 10. The separable busbar 11 is in an electrically connected state when the first contact portion 11a in the first busbar 11A and the second contact portion 11b in the second busbar 11B come in contact with each other. In the separable busbar 11 shown in FIGs. 2 and 3, the first contact portion 11a is placed on the second contact portion 11b when they are in contact with each other. The contact direction and the contact manner in the separable busbar are not limited to the illustrated example. In addition to being vertically overlapped, the first contact portion and the second contact portion may come in contact with each other in any manner to cause the separable busbar to be in a connected state. The separable busbar 11 is maintained to be separate, with the screw 21 being loosened. The separable busbar 11 can be fastened with the screw 21, causing the first contact portion 11a and the second contact portion 11b to come in contact with each other to be in a connected state. The separable busbar 11 maintained to be separate, before being fastened with the screw 21, includes the first contact portion 11a and the second contact portion 11b that are spaced apart and separated from each other to be in a disconnected state. The separable busbar11 can be in a disconnected state when the screw 21 is loosened, causing the first contact portion 11a and the second contact portion 11b to be spaced apart and separated.

The separable busbar 11 includes the first busbar 11A and the second busbar 11B that can be connected with the screw 21. The separable busbar 11 is connected when the screw 21 in the connector 20 is tightened, causing the surface of the first contact portion 11a in the first busbar 11A to be in contact with the surface of the second contact portion 11b in the second busbar 11B. As indicated by the dashed arrow in FIGs. 3 and 4, the screw 21 is placed through a screw through-hole 19 in the first contact portion 11a and the second contact portion 11b and tightened into the nut 22 in the nut holder 5a to cause the separable busbar 11 to be in a connected state (FIG. 2). The screw 21 is tightened on the separation portions of the separable busbar 11 maintained to be separate to cause the separable busbar 11 to be in a connected state. This simplifies the structure and the separation and connection operation. The separable busbar 11 is one of the busbars 10 connecting the positive lead plate 6A and the negative lead plate 6B in series. The separable busbar 11 can reliably enter a disconnected state when the separable busbar 11 is separated. The separable busbar 10 can enter a connected state with the screw 21 being tightened on the separation portions and can enter a disconnected state with the screw loosened to separate the separation portions again. The battery pack 100 eliminates a separate component, or more specifically, a service plug (refer to FIG. 8) that is placed or removed to cause the battery pack 100 to be in a connected state or in a disconnected state. This reduces the number of components and lowers the cost. When the separable busbar 11 is in a disconnected state, a high-voltage environment is avoided, ensuring operation safety. The separable busbar 11 can reliably be in a connected state with the screw 21 easily being tightened. The separable busbar 11 tightened with the screw 21 increases the contact pressure between the first busbar 11A and the second busbar 11B, stably achieving low contact resistance over a long period. The service plug cannot be smoothly placed or removed when the service plug is too small. More specifically, when the size difference between a cylindrical body of an insertion portion (an inserted body) and a cylindrical body of a receiving terminal (a receiving body) is too small, or when the size of the insertion portion is larger than the receiving terminal, the service plug cannot be placed or removed. The size difference between the insertion portion and the receiving terminal being too large can cause a contact failure. When the service plug is repeatedly placed and removed, stable and low contact resistance over a long period is thus difficult to achieve. The structure in which the separation portions of the separable busbar 11 are connected with screw tightening eliminates these issues related to the service plug.

The separable busbar 11 maintained to be separate includes the first busbar 11A and the second busbar 11B spaced apart. Thus, the separable busbar 11 before screw tightening includes the first contact portion 11a spaced apart from the second contact portion 11b with the separation gap 11c between the first contact portion 11a and the second contact portion 11b. The separable busbar 11 is maintained to be separate when at least one of the first busbar 11A or the second busbar 11B is located at a position to separate the first contact portion 11a and the second contact portion 11b. For example, the separable busbar 11 may be spaced apart and separated when at least one of the first busbar 11A or the second busbar 11B being one of two separate components is angled, allowing the other busbar to be spaced apart and separated. The separable busbar 11 in FIG. 4 includes the first busbar 11A, which is to be placed on the second busbar 11B, that is angled to move upward and away from the battery holder 5, causing the first contact portion 11a to be spaced apart from the second contact portion 11b.

The separable busbar 11 includes the first busbar 11A and the second busbar 11B, at least one of which includes one or more bends 13 or a slope 14. The separable busbar 11 with the bend 13 or the slope 14 can have a shape or an orientation that maintains the separation of the separable busbar 11. The separable busbar 11 may combine the bend 13 and the slope 14. The bend 13 or the slope 14 may be curved. The separable busbar 11 in FIG. 4 includes the bend 13 in the busbar 10 being bent relative to the base plate 12. The base plate 12 is a plate being the base excluding the bend 13 and the slope 14, or a plate being the base of the corresponding series busbar 10. The base plate 12 in FIG. 4 is a flat plate located adjacent to or in contact with the side surface of the battery holder 5. The bend 13 causes the first contact portion 11a and the second contact portion 11b to be spaced apart. The first busbar 11A in the separable busbar 11 in the figure includes the first contact portion 11a moved upward and away from the battery holder 5 with the bend 13 (a first bend 13a) and spaced apart from the second contact portion 11b. The first busbar 11A in the separable busbar 11 in the figure further includes a second bend 13b bent in the opposite direction from the first bend 13a. The separable busbar 11 includes the first bend 13a and the second bend 13b in an S shape. This allows the flat surface of the first contact portion 11a to be in contact with the flat surface of the second contact portion 11b. This also reliably increases the area of surfaces in contact with each other. The separable busbar 11 in FIG. 4 includes the slope 14 inclined with respect to the base plate 12. The slope 14 causes the first contact portion 11a and the second contact portion 11b to be spaced apart. The first busbar 11A in the separable busbar 11 in the figure includes the slope 14 causing the first contact portion 11a to be located upward and away from the battery holder 5 and spaced apart from the second contact portion 11b.

The separable busbar 11 can have at least one of the first contact portion 11a or the second contact portion 11b located at a stepped position with respect to the base plate 12. The separable busbar 11 in a connected state in FIG. 2 includes the first busbar 11A and the second busbar 11B each having a step, causing the first contact portion 11a and the second contact portion 11b to be at stepped positions. In the separable busbar 11 shown in the figure, the flat surface of the first contact portion 11a overlaps and is in contact with the flat surface of the second contact portion 11b on the nut holder 5a (or the nut 22), to increase the contact area. The separable busbar 11 clamped and pressed together with the screw 21 can stably achieve low contact resistance. The separable busbar 11 in a connected state in FIG. 2 includes the second busbar 11B, which is to be placed below the first busbar 11A, including the second contact portion 11b on the upper level with respect to the base plate 12 on the lower level. The second busbar 11B includes the second contact portion 11b covering the opening of the nut holder 5a to serve as the upper lid holding the nut 22 that prevents the nut 22 from slipping off. The separable busbar 11 may have any type of surface, such as a flat surface, a curved surface, a surface with protrusions and recesses, or a combination of these, that allows the first busbar 11A and the second busbar 11B to be spaced apart, separated, and come in contact with each other.

The separable busbar 11 can include the first busbar 11A and the second busbar 11B, at least one of which being an elastically deformable plate. The separable busbar 11 has the elastic restoring force causing the first busbar 11A and the second busbar 11B to be spaced apart and separated to maintain the separation of the separable busbar 11. The elastic force of at least one of the first busbar 11A or the second busbar 11B causes the first contact portion 11a and the second contact portion 11b to be at predetermined positions, reliably achieving and maintaining the separation of the separable busbar 11. In FIG. 4, the elastic force of the first busbar 11A, which is to be placed on the second busbar 11B, causes the first contact portion 11a to be spaced apart from the second contact portion 11b, which is to be placed below the first contact portion 11a, maintaining the separation. The separable busbar 11 in the figure includes an elastic member 16 being an elastically deformable plate as the first busbar 11A. The separable busbar 11 may partially include an elastic portion. For example, the first busbar 11A in the figure may partially include the elastic portion in the bend 13, the slope 14, or the stepped portion. The separable busbar 11 can have the elastic force as appropriate for the shape, thickness, material, or a combination of these of the separable busbar 11. The elastic force of the separable busbar 11 maintains the positions of the first contact portion 11a and the second contact portion 11b spaced apart from each other. When the screw 21 is tightened, the first contact portion 11a and the second contact portion 11b can come in contact with each other to be in a connected state. When the screw 21 is loosened, the first contact portion 11a and the second contact portion 11b can be separated again. The separable busbar 11 in the figure includes the second busbar 11B being an elastically deformable plate. The second busbar 11B can come in contact with or be placed adjacent to the nut holder 5a or the nut 22 covering the opening as an upper lid.

The separable busbar 11 in FIG. 2 is a flat plate. The flat surface of the first contact portion 11a and the flat surface of the second contact portion 11b come in contact with each other to be in a connected state. The separable busbar 11 includes the first contact portion 11a and the second contact portion 11b clamped and pressed together when the connector 20 is tightened. The separable busbar 11 being a flat plate allows the flat surface of the first contact portion 11a to easily be in contact with the flat surface of the second contact portion 11b, increases the contact area, and increases the contact degree (pressure) when tightened with a screw, thus achieving more stable and low contact resistance over a long period. The series busbars may be other than flat plates and have the shape and size that allow the contact portions to be connected. Although not shown, the contact portions of the series busbars may have, for example, protrusions and recesses or may have a shape or a structure for interlocking or preventing misarrangement. The separable busbar 11 in the figure is a conductive metal plate (elastic metal plate).

The separable busbar 11 includes the first contact portion 11a and the second contact portion 11b that can be spaced apart at least perpendicularly to their flat surfaces. The separable busbar 11 in FIG. 4 includes the first contact portion 11a and the second contact portion 11b that can be spaced apart at least perpendicularly to the side surfaces of the battery cells 3. The separable busbar 11 with this structure can be separated by simply causing the first busbar 11A to be spaced apart from the side surface of the corresponding battery cell 3. The separable busbar 11 described above can also reduce misarrangement of the first contact portion 11a and the second contact portion 11b in contact with each other, position the first contact portion 11a and the second contact portion 11b to cause the surface of the first contact portion 11a and the surface of the second contact portion 11b to easily be in contact with each other, reliably increase the area of surfaces in contact with each other, allow easy tightening and loosening of the screw 21, achieve low electrical resistance, and simplify separation and connection. The first contact portion 11a and the second contact portion 11b may be spaced apart in a direction other than the perpendicular direction relative to their flat surfaces or in a direction including the direction other than the perpendicular direction. The first contact portion 11a and the second contact portion 11b may be spaced apart in a direction other than the perpendicular direction relative to the side surfaces of the battery cells 3 or in a direction including the direction other than the perpendicular direction.

The first contact portion 11a and the second contact portion 11b are clamped and pressed together with the connector 20 to be connected. The first contact portion 11a and the second contact portion 11b in FIG. 3 have the screw through-hole 19 being a through-hole (round hole) through which the screw 21 is placed. Through the screw through-hole 19, the connector 20 clamps and presses the first contact portion 11a and the second contact portion 11b together at a predetermined position to achieve a predetermined contact state and stable contact resistance. The screw 21 is placed through the screw through-hole 19 in the first contact portion 11a and the second contact portion 11b of the separable busbar 11. When the screw 21 is tightened into the nut 22, the first contact portion 11a and the second contact portion 11b enter a connected state. Although not shown, the screw through-hole may be of any shape other than round, and may be an open ring such as a U- or Y-shaped ring including a non-connection portion. A ring including the non-connection portion can be placed in the side surface direction of the screw and can have a shape that prevents the screw from slipping off.

The separable busbar 11 includes the first busbar 11A and the second busbar 11B, at least one of which can include an elastic member 16 to maintain the separation. For example, when the elastic member 16 is placed, bonded, or fixed between the separable busbar 11 and the battery holder 5, the elastic force of the elastic member 16 causes the first contact portion 11a and the second contact portion 11b to be spaced apart, maintaining the separation of the separable busbar 11. When the separable busbar 11 is not the elastic member 16 or the separable busbar 11 does not include elastic portions, the elastic force of the elastic member 16 located between the separable busbar 11 and the battery holder 5 can maintain the separation of the separable busbar 11. The first busbar 11A in FIG. 5 includes the first contact portion 11a located away from the second contact portion 11b with the elastic member 16 placed between the first busbar 11A and the battery holder 5. In this case as well, when the screw 21 is tightened, the first busbar 11A, which is to be placed on the second busbar 11B, is pressed downward while compressing the elastic member 16, causing the first contact portion 11a to come in contact with the second contact portion 11b. The elastic member 16 and the separable busbar 11 having the elastic force can mutually reinforce each other to maintain the separation of the separable busbar 11. The separable busbar 11 may have the elastic member 16 being attached, integral with the separable busbar 11, or separately included. The elastic member 16 can also be placed between the first contact portion 11a and the second contact portion 11b to maintain the separation of the separable busbar 11. The elastic member 16 being an insulator can reliably space the first contact portion 11a and the second contact portion 11b apart.

The separable busbar 11 in FIG. 2 is supported and held in a predetermined orientation and position with the supports 18a or the positioners 18b in the battery holder 5. The supports 18a or the positioners 18b can facilitate easy and prompt positioning of the separable busbar 11 in the predetermined orientation and position. This improves, for example, the safety and efficiency of operations such as assembly of the battery pack 100. Each support 18a or positioner 18b positioning the separable busbar 11 is in contact with the separable busbar 11 at a point, along a line, or by surfaces and is being placed through the through-hole. A single or multiple supports 18a or the positioners 18b may be included as appropriate for the shape of the separable busbar 11 or positioning accuracy and a degree of support intended for the separable busbar 11. The separable busbar 11 in FIGs. 2 and 3 is held between the supports 18a located on the two sides and held in the predetermined orientations and positions with the positioners 18b as multiple protrusions. The separable busbar 11 in the figure is positioned between the supports 18a on the two sides as appropriate for the circular shapes of the first contact portion 11a and the second contact portion 11b of the contact portions on the upper level, the shapes of the bends 13, and the height difference between the bends 13. The second busbar 11B in the figure includes one positioner 18b being a protrusion on the base plate 12 and the second contact portion 11b on the upper level of the step. The positioner 18b is placed through the through-hole in the second busbar 11B to hold the second busbar 11B in the predetermined orientation and position. The first busbar 11A being separated in FIG. 3 includes one positioner 18b being a protrusion on the base plate 12. The positioner 18b is placed through the through-hole in the first busbar 11A to hold the first busbar 11A in the predetermined orientation and position. The first busbar 11A being connected as shown in FIG. 2 is connected and maintained in a predetermined orientation and position with the screw 21 tightened.

In FIG. 3, the supports 18a surrounding the second contact portion 11b from the two sides with a small clearance adjacent to the first busbar 11A prevent the first contact portion 11a and the second contact portion 11b from coming in contact and short-circuiting when, for example, the operator unintentionally touches the first busbar 11A. The first contact portion 11a and the second contact portion 11b do not come in contact unless the first busbar 11A is placed between the supports 18a surrounding the second contact portion 11b from the two sides. In addition, the first busbar 11A in FIG. 3 does not include any supports 18a on two sides of the first busbar 11A between the first bend 13a and the distal end of the first contact portion 11a. This structure allows the first busbar 11A to move toward the battery holder 5 in a wide range. When the operator unintentionally touches the first busbar 11A, the first busbar 11A can come in contact with the supports 18a surrounding the second contact portion 11b from the two sides, preventing the first contact portion 11a and the second contact portion 11b from coming in contact for ensuring operation safety. When the operator intentionally places the first busbar 11A between the supports 18a surrounding the second contact portion 11b from the two sides, the first contact portion 11a and the second contact portion 11b can be connected.

### (Connector 20)

The connector 20 connects the first busbar 11A and the second busbar 11B when tightened. The connector 20 includes the screw 21 (bolt) including the threads or the external threads, and the nut 22 including the threaded hole, or the internal threads. The screw 21 is tightened into the nut 22. When the screw 21 is tightened into the nut 22, the first busbar 11A and the second busbar 11B enter an electrically connected state. When the screw 21 is loosened, the first busbar 11A and the second busbar 11B are separated and spaced apart from each other to be in a disconnected state. The screw 21 connects the first contact portion 11a and the second contact portion 11b with tightening of the screw 21. As shown in FIG. 4, the first contact portion 11a and the second contact portion 11b of the separable busbar 11 are placed between the screw 21 and the nut 22. The screw 21 is tightened into the nut 22 to clamp and press the first contact portion 11a and the second contact portion 11b together to cause the first busbar 11A and the second busbar 11B to be in a connected state. The screw 21 is tightened to reliably maintain the contact between the first busbar 11A and the second busbar 11B, achieving low electrical resistance and stable connection resistance over a long period.

The separable busbar 11 in FIG. 4 is a conductor that energizes the first contact portion 11a and the second contact portion 11b being in contact with each other. The connector 20 formed from metal is also a conductor and connects the first contact portion 11a and the second contact portion 11b with the screw 21 and the nut 22 in the connector 20. The connection between the first contact portion 11a and the second contact portion 11b and the connection with the screw 21 and the nut 22 in the connector 20 can mutually reinforce the energization.

The nut 22 is received in the nut holder 5a in the battery holder 5 and held in a predetermined orientation and position in a nonrotatable manner. The nut holder 5a has an open top to receive the nut 22 and hold the nut 22 in a nonrotatable manner. The nut holder 5a may be, for example, a recess, or may be surrounded by plates or by protrusions of the battery holder 5. The nut holder 5a surrounds and holds the nut 22 in at least two directions. The nut holder 5a positions the nut 22 in the predetermined orientation and holds the nut 22 in a nonrotatable manner. The nut holder 5a has an inner profile slightly larger than the outer profile of the nut 22 to receive and hold the nut 22 in a nonrotatable manner. Although not shown, the nut may be fixed in a nonrotatable manner by, for example, being bonded or welded to the battery holder or the separable busbar. In this case, the nut holder for receiving the nut may not be shaped to allow the nut to fit in a nonrotatable manner. The nut 22 in the figure is received and held in the nut holder 5a. The second contact portion 11b of the second busbar 11B is placed on the nut 22 covering the opening to prevent the nut 22 from slipping off and changing the orientation. The first contact portion 11a is placed on the second contact portion 11b. When the screw 21 is placed through the screw through-hole 19 in the first contact portion 11a and the second contact portion 11b and tightened to press the first contact portion 11a and the second contact portion 11b together, the separable busbar 11 is in contact. The nut holder 5a facilitates easy and efficient tightening and loosening of the screw 21 in the connector 20, simplifying separation and connection of the separable busbar 11. The nut holder 5a prevents the screw 21 from slipping off, thus preventing issues such as a short circuit.

The connector 20 may include a washer. For example, the screw 21 can be used with a flat washer to distribute the axial force of the screw 21 on the first contact portion 11a and the second contact portion 11b of the base. The flat washer can also increase the area in which the first contact portion 11a and the second contact portion 11b are clamped and pressed together, prevent the base from falling, and reduce damage to the base. The screw 21 may be used with a spring washer to reduce or prevent loosening of the screw 21 with the reaction force of the spring. The first contact portion 11a and the second contact portion 11b of the separable busbar 11 are clamped between the threaded head (or the washer) of the screw 21 and the nut 22 in the connector 20, and pressed together to be in a connected state when the screw 21 is tightened.

The screw 21 can be a captive screw. Although not shown, when the screw is a captive screw, the shank is thinner than the threads at the distal portion, causing the screw to be caught in the screw through-hole and preventing the screw from falling off the separable busbar. The screw 21 being the captive screw facilitates easy, reliable, and efficient connection and separation of the separable busbar 11 and prevents the screw 21 from slipping off, preventing issues such as short-circuiting or loss of the screw 21.

### [EMBODIMENT 2]

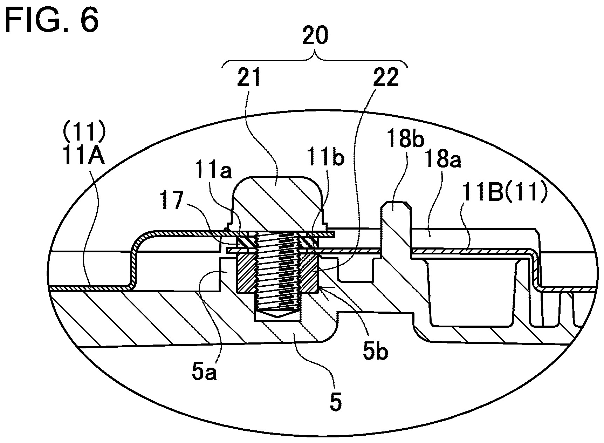

FIG. 6 shows a separable busbar 11 in Embodiment 2. The separable busbar 11 in FIG. 6 is not in contact when an insulator 17 is placed between the first contact portion 11a and the second contact portion 11b of the separable busbar 11. As shown in FIGs. 4 and 5, for example, the battery pack 100 includes the separable busbar 11 that can be maintained to be separate with the elastic force of the separable busbar 11, with the elastic force of the elastic member 16 separately placed, or with the combined elastic force of the separable busbar 11 and the elastic member 16 to ensure operation safety. The separable busbar 11 may also include an insulator between the first contact portion 11a and the second contact portion 11b to ensure safety more reliably. For example, the insulator 17 in FIG. 6 is annular and has a hole for receiving the screw 21. Although not shown, the separable busbar can have the contact portion partially covered with a rubber insulator, such as a rubber tube. The insulator 17 placed between the first contact portion 11a and the second contact portion 11b prevents the separable busbar 11 from being energized when, for example, the operator accidentally touches the separable busbar 11 in an assembly operation.

The separable busbar 11 in FIG. 6 uses the connector 20 as the conductor to energize the first contact portion 11a and the second contact portion 11b. Although not shown, the energization through the connector and the energization through the first contact portion and the second contact portion in contact can mutually reinforce the electrical connection.

### INDUSTRIAL APPLICABILITY

The technique according to the above aspects of the present disclosure is effectively applicable to a structure for disconnecting the power connection path in place of a service plug, a battery pack in a connected state that can reduce and stabilize contact resistance with a simplified operation, and a product incorporating the battery pack.

### REFERENCE SIGNS LIST

- 100, 900: battery pack

- 2: outer case
- 3: battery cell
- 4: battery block
- 4p: parallel block
- 5: battery holder
- 5a: nut holder
- 5b: fitting recess
- 6: lead plate
- 6A: positive lead plate
- 6B: negative lead plate
- 10: series busbar
- 11: separable busbar
- 11A: first busbar
- 11B: second busbar
- 11a: first contact portion
- 11b: second contact portion
- 11c: separation gap
- 12: base plate
- 13: bend
- 13a: first bend
- 13b: second bend
- 14: slope
- 15: through-hole
- 16: elastic member
- 17: insulator
- 18a: support
- 18b: positioner
- 19: screw through-hole
- 20: connector
- 21: screw
- 22: nut
- 905: receiving terminal
- 904A, 904B: battery block
- 930: service plug
- 931: insertion portion
- 932: insulating member

## Claims

1. A battery pack, comprising:
a battery block including a plurality of battery cells; and
series busbars connecting the plurality of battery cells in the battery block in series,
wherein at least one of the series busbars is a separable busbar including
a first busbar and a second busbar connected in a separable manner from each other, and
a screw electrically connecting the first busbar to the second busbar,
wherein the screw being tightened electrically connects the first busbar to the second busbar, and
wherein the screw being loosened causes the first busbar and the second busbar to be in a disconnected state.

2. The battery pack according to claim 1, wherein
the first busbar is an elastically deformable metal plate, and
the screw being loosened causes the first busbar to separate from the second busbar with an elastic restoring force of the first busbar.

3. The battery pack according to claim 1, wherein
the screw being loosened causes the first busbar and the second busbar to be in the disconnected state with an elastic member or an insulator.

4. The battery pack according to claim 1, wherein
at least one of the first busbar or the second busbar includes a bend or a slope.

5. The battery pack according to claim 1, wherein
the battery block includes
a positive lead plate connected to positive electrodes of the plurality of battery cells,
a negative lead plate connected to negative electrodes of the plurality of battery cells, and
a plurality of parallel blocks each including battery cells of the plurality of battery cells connected in parallel to one another through the positive lead plate and the negative lead plate, and
the plurality of parallel blocks are connected in series by the series busbars.

6. The battery pack according to any one of claims 1 to 5, wherein
the screw being tightened electrically connects the first busbar to the second busbar, with a surface of the first busbar being connected to a surface of the second busbar.

7. The battery pack according to claim 6, wherein
the battery block includes a battery holder holding the plurality of battery cells,
the battery holder includes a support supporting, at a predetermined position, a connection portion of the first busbar and a connection portion of the second busbar for electrical connection of the first busbar and the second busbar, and
the screw is tightened on the connection portion of the first busbar and the connection portion of the second busbar to fasten the first busbar to the second busbar.

8. The battery pack according to claim 6, wherein
the battery block includes a battery holder holding the plurality of battery cells,
the battery holder includes a positioner configured to position, at a predetermined position, a connection portion of the first busbar and a connection portion of the second busbar for electrical connection of the first busbar and the second busbar, and
the screw is tightened on the connection portion of the first busbar and the connection portion of the second busbar to fasten the first busbar to the second busbar.

9. The battery pack according to claim 6, wherein
the separable busbar includes a nut to receive the screw,
the battery block includes a battery holder holding the plurality of battery cells,
the battery holder includes a nut holder holding the nut in a nonrotatable manner, and
the screw is tightened into the nut held by the nut holder to fasten the first busbar to the second busbar.

10. The battery pack according to claim 9, wherein
the nut holder is a fitting recess receiving the nut in a nonrotatable manner.
